# EUROPÄISCHE PATENTANMELDUNG

(11) **EP 4 592 265 A1**
(43) Veröffentlichungstag der Anmeldung: **30.07.2025**
(21) Anmeldenummer: 24154251.3
(22) Anmeldetag: 26.01.2024
(51) Int. Cl.: C04B 28/06, C04B 38/10, C04B 111/62

(54) **ZUSAMMENSETZUNG ZUR HERSTELLUNG VON BETON, INSBESONDERE PORENLEICHTBETON, FLIESSESTRICH, 3D-DRUCKMÖRTEL UND SPACHTELMASSE SOWIE VERFAHREN ZU DEREN HERSTELLUNG UND DEREN VERWENDUNG**

(71) Anmelder: HEID AG, 6045 Meggen (CH)
(72) Erfinder: Heid, Yves, 6045 Meggen (CH)
(74) Vertreter: Braunpat AG

(57) **Zusammenfassung**

Die vorliegende Erfindung ist gerichtet auf eine Zusammensetzung zur Herstellung von Beton, insbesondere von Porenleichtbeton, von Fliessestrich, von 3D Druckmörtel oder von Spachtelmasse, die sich insbesondere dadurch auszeichnet, dass die Menge an Verflüssiger und/oder Verzögerer jeweils im Bereich von 0,05 bis 2,00 Gew.-% ist, bezogen auf das Gesamtgewicht an Zement, und wobei die Zusammensetzung eine Nassdichte im Bereich von 100 bis 1250 kg/m³ für Porenleichtbeton, eine Nassdichte im Bereich von 1800 bis 2200 kg/m³ für 3D Druckmörtel, eine Nassdichte im Bereich von 2000 bis 2200 kg/m³ für Fliessestrich und eine Nassdichte im Bereich von 1900 bis 2000 kg/m³ für Spachtelmasse aufweist. Die Erfindung ist auch gerichtet auf den durch Trocknen aus der Zusammensetzung hergestellten Beton, insbesondere Porenleichtbeton, Fliessestrich, 3D Druckmörtel oder Spachtelmasse.

Ein weiterer Gegenstand der Erfindung ist ein Verfahren zur Herstellung dieser Zusammensetzungen und deren Verwendung als Beton, insbesondere als Porenleichtbeton, als Fliessestrich, als 3D Druckmörtel oder als Spachtelmasse.

## Beschreibung

### Technisches Gebiet der Erfindung

Die vorliegende Erfindung betrifft eine Zusammensetzung zur Herstellung von Beton, insbesondere Porenleichtbeton, Mörtel, insbesondere 3D Druckmörtel, Fliessestrich und Spachtelmasse, sowie ein Verfahren zur Herstellung dieser Zusammensetzung und deren Verwendung. Bei dem Beton handelt es sich insbesondere um Porenleichtbeton, auch Schaumbeton genannt.

### Stand der Technik

Die aus dem Stand der Technik bekannten Zusammensetzungen berücksichtigen meist nicht die auf der Baustelle herrschenden Aussentemperaturen sowie die im Rohbau herrschenden Umgebungstemperaturen.

Es war daher die Aufgabe der vorliegenden Erfindung eine Zusammensetzung bereitzustellen, bei der dies möglich ist, sowie ein Verfahren zu deren Herstellung.

Zudem weist herkömmlicher Porenleichtbeton eine maximale Nassdichte von 500 kg/m³ auf. Es war daher eine zusätzliche Aufgabe der Erfindung, einen Porenleichtbeton bereitzustellen, der eine Nassdichte von bis zu 1250 kg/m³ aufweist.

### Beschreibung der Erfindung

Diese Aufgabe wird gelöst durch eine Zusammensetzung zur Herstellung von Beton, insbesondere zur Herstellung von Porenleichtbeton, von Mörtel, insbesondere von 3D Druckmörtel, von Fliessestrich oder von Spachtelmasse, welche folgende Komponenten enthält:
i) eine pulverförmige Hauptkomponente ausgewählt aus CEM I Zement, CEM II Zement, Sand, Quarzsand und deren Mischungen, bevorzugt ausgewählt aus 52,5 R Zement, 42,5 R Zement, 32,5 R Zement, Sand, Quarzsand und deren Mischungen;
ii) eine weitere erste pulverförmige Nebenkomponente ausgewählt aus CSA-Zement, Calciumaluminat-Zement und deren Mischungen;
iii) optional eine weitere zweite Nebenkomponente ausgewählt aus Glasfasern, Eisenoxidpulvern und Farbmitteln;
iv) mindestens eine flüssige Nebenkomponente ausgewählt aus Verzögerern, Verflüssigern und Schwundreduktion
v) optional mindestens ein flüssiges Schaummittel; und
vi) Wasser;

wobei die Menge an Verflüssiger und/oder die Menge an Verzögererjeweils im Bereich von 0,05 bis 2,00 Gew.-% ist, bezogen auf das Gesamtgewicht an Zement in der Zusammensetzung; und
wobei die Zusammensetzung eine Nassdichte im Bereich von 100 bis 1250 kg/m³ für Porenleichtbeton, eine Nassdichte im Bereich von 1800 bis 2200 kg/m³ für 3D Druckmörtel, eine Nassdichte im Bereich von 2000 bis 2400 kg/m³ für Fliessestrich und eine Nassdichte im Bereich von 1800 bis 2200 kg/m³ für Spachtelmasse aufweist.

Die Nassdichte wird auch als Rohdichte bezeichnet.

Der Begriff «Zement» umfasst hierbei die pulverförmige Hauptkomponente und die erste pulverförmige Nebenkomponente, soweit es sich hierbei um Zement handelt, d.h. also der Begriff «Zement» umfasst CEM I Zement, CEM II Zement, CSA-Zement, Calciumaluminat-Zement und deren Mischungen. Insbesondere umfasst der Begriff «Zement» 52,5 R Zement, 42,5 R Zement, 32,5 R Zement, CSA-Zement, Calciumaluminat-Zement und deren Mischungen.

In einer bevorzugten Ausführungsform der erfindungsgemässen Zusammensetzung machen die Komponenten i) bis v) mindestens 90 Gew.-% aller in der Zusammensetzung vorhandenen Komponenten ausser Wasser aus. D.h. bezogen auf das Gesamtgewicht der Komponenten i) bis v) können maximal 10 Gew.-%, bevorzugt maximal 7 Gew.-%, besonders bevorzugt maximal 5 Gew.-%, weitere Komponenten enthalten sein. Solche weiteren Komponenten sind beispielsweise Flugasche, Kalk (CaO, Ca(OH)₂, CaCOs), Kalksteinmehl, Puzzolane, Kaolin, Silika, Hydroxylapatit (Ca₅[OH/(PO₄)₃]), Tricalciumphosphat, Gips, Sand, Tuff, Trass, Gesteinsmehl, Silicastaub, Silicasuspension, Hüttensandmehl, Kalksteinmehl Quarzmehl, und weitere dem Fachmann bekannte Zusatzstoffe für Beton, insbesondere für Porenleichtbeton, für Mörtel, für 3D Druckmörtel, für Fliessestrich oder für Spachtelmasse.

In einer weiteren bevorzugten Ausführungsform der erfindungsgemässen Zusammensetzung enthält diese keine weiteren Komponenten ausser den Komponenten i) bis vi).

Die einzelnen Komponenten werden nun im Folgenden im Detail beschrieben.

Die sogenannten Normalzemente und deren Anforderungen sind in DIN EN 197-1 beschrieben: CEM I Zement weisen einen Klinkeranteil von mindestens 95% auf, während CEM II Zemente bis zu 20% Hilfsstoffe enthalten können. R Zemente sind Zemente mit hoher Anfangsfestigkeit und schneller Festigkeitsentwicklung. 42,5 R Zement, auch unter dem Namen «CEM II Zement» oder «A-S 42,5 R-Zement» bekannt, ist ein Zement der Festigkeitsklasse 42,5 R, der durch gemeinsames Vermahlen von Portlandzementklinker, Hüttensand und Gips hergestellt werden kann. Anstelle von Hüttensand können andere latent hydraulische Bestandteile wie Flugaschen oder Puzzolane enthalten sein. 52,5 R Zement, auch «CEM I 52,5 R Zement» genannt, ist ein Zement der Festigkeitsklasse 52,5 R, der durch Vermahlen von Portlandzementklinker und Gips hergestellt wird. Portlandzemente haben eine Calciumsilikat-Basis und CSA-Zemente basieren auf **C**alcium**s**ulfo**a**luminaten und den Rohstoffen Kalkstein, Bauxit und Gips.

Tonerdezement wird in DIN EN 14647 beschrieben. Tonerde ist die Bezeichnung für Aluminiumoxid. Tonerdezement wird beispielsweise durch langsame Kühlung von Schmelzen mit Monocalciumaluminat-Zusammensetzung oder durch Sintern von gleichartig zusammengesetzten Rohmischungen aus Kalkstein und aus dem Aluminiumerz Bauxit (auch als Weißzement) hergestellt. Im Gegensatz zu den silikatischen Zementen besteht er im wesentlichen aus Monocalciumaluminat (CA), weshalb auch der Begriff Calciumaluminat-Zement geläufig ist. Wesentliche Bestandteile daneben sind in kalkreicheren Tonerdezementen das C₁₂A₇ und in kalkärmeren das CA₂. Der SiO₂-Anteil ist entweder als C₂S oder C₂AS (Gehlenit) gebunden. Das Erstarren und Erhärten beruht auf der Bildung von Calciumaluminathydraten, bei den silikatischen Zementen dagegen auf der Bildung von Calciumsilicathydraten (CSH). Tonerdezement hydratisiert deutlich schneller als Portlandzement, bindet dabei etwa doppelt so viel Wasser und spaltet nahezu kein Ca(OH)₂ ab. Tonerdeschmelzzement ist eine tonerdereiche Schlacke, die feingemahlen wurde. Kommerziell ist Calciumaluminat-Zement auch unter der Bezeichnung «Ciment Fondu» erhältlich.

In einer bevorzugten Ausführungsform ist die pulverförmige Hauptkomponente i) 52,5 R Zement oder 42,5 R Zement oder deren Mischung ist, bevorzugt ist die pulverförmige Hauptkomponente i) 52,5 R Zement, und die erste pulverförmige Nebenkomponenten ii) ist CSA-Zement oder Calciumaluminat-Zement oder deren Mischung, bevorzugt ist die erste pulverförmige Nebenkomponenten ii) CSA-Zement, insbesondere wenn die Zusammensetzung eine Zusammensetzung zur Herstellung von Beton, insbesondere zur Herstellung von Porenleichtbeton, ist.

In einer weiteren bevorzugten Ausführungsform ist das Gewichtsverhältnis der Komponente i) zu der Komponente ii) im Bereich von 10 : 1 bis 1 : 1, bevorzugt im Bereich von 5 : 1 bis 1,2 : 1, besonders bevorzugt im Bereich von 4 : 1 bis 1,3 : 1 ist, bevorzugt wenn die Komponente i) CEM I Zement und die Komponente ii) CSA-Zement ist, besonders bevorzugt wenn die Komponente i) 52,5 R Zement und die Komponente ii) CSA-Zement ist.

Wird eine Zusammensetzung zur Herstellung von Beton, insbesondere zur Herstellung von Porenleichtbeton, eingesetzt, wobei die Komponente i) CEM I Zement, insbesondere 52,5 R Zement, und die Komponente ii) CSA-Zement ist, so kann deren Verarbeitbarkeit auf Aussentemperaturen von -10°C ausgedehnt werden, wenn der CSA-Zement mindestens teilweise durch Calciumaluminat-Zement ersetzt ist, bevorzugt wenn der CSA-Zement in einem Bereich von 30 bis 70 Gew.-%, besonders bevorzugt in einem Bereich von 20 bis 80 Gew.-%, ganz besonders bevorzugt in einem Bereich von 10 bis 100 Gew.-%, durch Calciumaluminat-Zement ersetzt ist.

Derselbe Effekt kann auch bei den Zusammensetzungen zur Herstellung von Fliessestrich, von 3D Druckmörtel oder von Spachtelmasse erzielt werden, wenn der CSA-Zement mindestens teilweise durch Calciumaluminat-Zement ersetzt ist, bevorzugt wenn der CSA-Zement in einem Bereich von 30 bis 70 Gew.-%, besonders bevorzugt in einem Bereich von 20 bis 80 Gew.-%, ganz besonders bevorzugt in einem Bereich von 10 bis 100 Gew.-%, durch Calciumaluminat-Zement ersetzt ist.

Ist die Zusammensetzung eine Zusammensetzung zur Herstellung von Beton, insbesondere von Porenleichtbeton, so ist die Gesamtmenge an Zement in kg in der Zusammensetzung bevorzugt im Bereich von 35 bis 80%, bevorzugt im Bereich von 40 bis 75% der Nassdichte in kg/m³.

Bevorzugt ist der Anteil an Zement im Beton, insbesondere im Porenleichtbeton, bezogen auf das Gesamtgewicht der Zusammensetzung, in einem Bereich von 42 kg pro 100 kg Zusammensetzung bei einer Nassdiche von 100 kg/m³ bis 920 kg pro 1250 kg Zusammensetzung bei einer Nassdiche von 1250 kg/m³.

Sand ist ein natürlich vorkommendes, unverfestigtes Sediment, das sich überwiegend aus Mineralkörnern mit einer Korngröße von 0,063 bis 2 Millimeter zusammensetzt. Die Bezeichnung «Sand» ist nicht abhängig von der mineralischen Zusammensetzung. Der größte Teil der Sande besteht jedoch mehrheitlich aus Quarzkörnern. Vor allem dieser Quarzsand ist ein bedeutender Rohstoff für das Bauwesen und wird auch in der erfindungsgemässen Zusammensetzung zur Herstellung von Fliessestrich, 3D Druckmörtel und Spachtelmasse verwendet.

Die Zusammensetzung für die Herstellung von 3D Druckmörtel weist bevorzugt ein Gewichtsverhältnis von Sand zur Gesamtmenge an Zement im Bereich von 3 : 1 bis 1,5 : 1, besonders bevorzugt im Bereich von 2,8 : 1 bis 2,0 : 1, ganz besonders bevorzugt im Bereich von 2,6 : 1 bis 2,2 : 1 auf. Als Zement wird bevorzugt eine Mischung von CEM I Zement und CSA-Zement oder eine Mischung von CEM II Zement und CSA-Zement, besonders bevorzugt eine Mischung von 52,5 R Zement und CSA-Zement oder eine Mischung von 42,5 R Zement und CSA-Zement oder eine Mischung von 32,5 R Zement und CSA-Zement, ganz besonders bevorzugt eine Mischung von 52,5 R Zement und CSA-Zement oder eine Mischung von 42,5 R Zement und CSA-Zement eingesetzt, wobei der CSA-Zement zu 50-100 Gew.-% durch Calciumaluminat-Zement ersetzt werden kann.

Die Zusammensetzung für die Herstellung von Spachtelmasse weist bevorzugt ein Gewichtsverhältnis von Sand zur Gesamtmenge an Zement im Bereich von 2,5 : 1 bis 1,0 : 1, besonders bevorzugt im Bereich von 2,0 : 1 bis 1,2 : 1, ganz besonders bevorzugt im Bereich von 1,8 : 1 bis 1,3 : 1 auf. Als Zement wird bevorzugt eine Mischung von CEM I Zement und CSA-Zement oder eine Mischung von CEM II Zement und CSA-Zement, besonders bevorzugt eine Mischung von 52,5 R Zement und CSA-Zement oder eine Mischung von 42,5 R Zement und CSA-Zement oder eine Mischung von 32,5 R Zement und CSA-Zement, ganz besonders bevorzugt eine Mischung von 52,5 R Zement und CSA-Zement oder eine Mischung von 42,5 R Zement und CSA-Zement eingesetzt, wobei der CSA-Zement zu 50-100 Gew.-% durch Calciumaluminat-Zement ersetzt werden kann. Ein gewisser Anteil des Zements kann auch durch der Fachperson bekannte Füllstoffe ersetzt werden, insbesondere ein Anteil von bis zu 30 Gew.-%, bevorzugt ein Anteil im Bereich von 5 bis 15 Gew.-%, bezogen auf das Gesamtgewicht des Zements.

Die Zusammensetzung für die Herstellung von Fliessestrich weist bevorzugt ein Gewichtsverhältnis von Sand zur Gesamtmenge an Zement im Bereich von 4 : 1 bis 2,0 : 1, besonders bevorzugt im Bereich von 3,5 : 1 bis 2,2 : 1, ganz besonders bevorzugt im Bereich von 3,0 : 1 bis 2,4 : 1 auf. Als Zement wird bevorzugt eine Mischung von CEM I Zement und CSA-Zement oder eine Mischung von CEM II Zement und CSA-Zement, besonders bevorzugt eine Mischung von 52,5 R Zement und CSA-Zement oder eine Mischung von 42,5 R Zement und CSA-Zement oder eine Mischung von 32,5 R Zement und CSA-Zement, ganz besonders bevorzugt eine Mischung von 52,5 R Zement und CSA-Zement oder eine Mischung von 42,5 R Zement und CSA-Zement eingesetzt, wobei der CSA-Zement zu 50-100 Gew.-% durch Calciumaluminat-Zement ersetzt werden kann.

Die zweite pulverförmige Nebenkomponente iii) ist ausgewählt aus Glasfasern, Eisenoxidpulvern, und Farbmitteln, welche im Folgenden näher beschrieben werden.

Als Glasfasern werden insbesondere alkaliresistente Glasfasern eingesetzt. Diese können insbesondere das früher eingesetzte Asbest ersetzen. Bereits ab einem Glasfaseranteil von 0,4 Vol.-% verbessern sich die Gebrauchseigenschaften von beispielsweise Beton deutlich, da die Rissbildung verringert wird. Glasfasern werden insbesondere zugegeben, um Bauteile mit besonderen Anforderungen an die Undurchlässigkeit herzustellen wie beispielsweise Fliessestrich. Da Glasfaser nicht rostet, ist für Bauteile mit einem Glasfaseranteil von 2,5 bis 5 Vol.-%, die keine witere metallische Bewehrung enthalten, keine Mindestbetondeckung erforderlich, so dass die Mindestdicke bis auf wenige Millimeter reduziert werden kann, und somit äusserst filigrane Formen hergestellt werden können.

Die Menge an Glasfaser ist bevorzugt im Bereich von 0,1 bis 1,5 Gew.-%, bezogen auf die Gesamtmenge an Sand und Zement, besonders bevorzugt im Bereich von 0,2 bis 1,2 Gew.-%, ganz besonders bevorzugt im Bereich von 0,3 bis 1,05 Gew.-%.

Das Eisenoxidpulver umfasst sowohl künstlich hergestellte Eisenoxidpigmente wie auch durch Mahlen von entsprechenden Eisenerzen wie beispielsweise Hämatit, Limonit, Goethit oder Magnetit gewonnene Eisenoxidpulver. Der Begriff Eisenoxidpulver umfasst desweiteren Eisenoxidrot, auch Marsrot genannt, welches aus Fe₂O₃ besteht, Eisenoxidgelb, auch Marsgelb genannt, welches aus Fe₂O₃ . H₂O oder FeOOH aufgebaut ist, sowie Eisenoxidschwarz, auch Marsschwarz genannt, welches überwiegend Fe₃O₄ enthält.

Als Farbmittel kann jede der Fachperson bekannte farbgebende Substanz eingesetzt werden, welche zum Färben, vorzugsweise zum dauerhaften Färben, von Beton, insbesondere von Porenleichtbeton, Mörtel, insbesondere 3D Druckmörtel, Fliessestrich und Spachtelmasse geeignet ist, wie beispielsweise Erdfarben. Erdfarben sind anorganische Pigmente. Sie werden durch Mahlen aus farbigen Mineralen oder Mineralgemischen gewonnen. Durch Brennen lässt sich bei einzelnen die Farbe verändern. So wird Gelber Ocker durch Erhitzen rot. Häufig verwendete Erdfarben sind Ocker, Grünerde, Rötel, Terra di Siena, Umbra, Kreide und Zinnober. Die Eisenoxidpigmente sowie die anderen Farbmittel können auch flüssig, insbesondere als wässrige Suspension, zudosiert werden.

Die Gesamtmenge an Eisenoxidpulvern und Farbmitteln ist bevorzugt im Bereich von 0,5 bis 7 Gew.-%, bezogen auf die Menge an R Zement, also bezogen auf die Menge an 52,5 R Zement oder 42,5 R Zement, besonders bevorzugt im Bereich von 0,8 bis 6 Gew.-%, ganz besonders bevorzugt im Bereich von 1 bis 5 Gew.-%. Das Eisenoxid kann auch als wässrige Dispersion eingesetzt werden wie sie beispielsweise in den Absätzen [0013] und [0014] der DE 603 11 180 T2 beschrieben ist. Auch die Farbmittel können als wässrige Dispersion eingesetzt werden.

Die mindestens eine flüssige Nebenkomponente iv) ist ausgewählt aus Verzögerern und Verflüssigern. Die mindestens eine flüssige Nebenkomponente iv) kann bevorzugt auf 2-3% genau dosiert werden.

Gemäss DIN EN 934-2 sind Verzögerer Betonzusatzmittel, die die Zeit bis zum Beginn des Übergangs der Mischung vom plastischen in den festen Zustand verlängern. Verzögerer sind Verbindungen, die Calciumionen als Chelate binden können.

Beispiele für Verzögerer sind Phosphonsäure-Derivate mit Hydroxy- oder Aminogruppen wie sie beispielsweise auf Seite 2, Zeile 40-49 der DE 40 38 147n offenbart werden, Hydroxycarbonsäuren und ihre Salze, wie Salicyl-, Citronen-, Milch-, Glucon-, Wein-, Mucon-, und Glucoheptansäure; Polycarbonsäuren und ihre Salze, wie Malein-, Fumar-, Itacon-, Malon-, Bernstein- und Phthalsäure sowie auch Polymalein-, Polyfumar-, Polyacryl- und Polymethacrylsäuren, vorzugsweise mit niedrigem Molekulargewicht; Antioxidantien wie Ascorbin- und Isoascorbinsäure; Polymere wie sulfonsäurehaltige Acrylpolymere und Polyhydroxysilane vorzugsweise mit niedrigem Molekulargewicht; Aldosen bzw. Ketosen, wie Zucker und Maissirup sowie Lignonsulfonate wie Calciumlignosulfonat. Ausserdem kommen anorganische (Phosphate, Borate) oder organische Komplexbildner (EDTA, NTA) und Zeolithe in Frage. In den erfindungsgemässen Zusammensetzungen werden Verzögerer eingesetzt, die bei einer Temperatur von -3 bis +50°C flüssig sind. Besonders bevorzugte Verzögerer sind Citronensäure, Weinsäure und Essigsäure, sowie deren Mischungen, sowie Verzögerer, die von der Firma Mapei S.P.A., Italien, kommerziell erhältlich sind. Ganz besonders bevorzugt ist Mapetard VZ/ Mapetart D der Firma Mapei S.P.A., Italien. Auch Mapetard SD2000 und Mapetard D, beide ebenfalls von der Firma Mapei S.P.A., Italien, können als Verzögerer eingesetzt werden.

Die Menge an Verzögerer wird in Abhängigkeit von der Temperatur zugegeben. Je nach Zusammensetzung wird bevorzugt Verzögerer in einer Menge von 0,05 bis 0,55 Gew.-% bei 0°C Aussentemperatur auf der Baustelle eingesetzt. Je nach Zusammensetzung wird besonders bevorzugt entweder 0,1 oder 0,5 Gew.-% Verzögerer, bezogen auf das Gesamtgewicht an Zement, bei 0°C Aussentemperatur zu der Zusammensetzung gegeben. Bevorzugt wird dann bei Temperaturerhöhung um 1K jeweils 0,02 Gew.-% mehr Verzögerer zugegeben, so dass je nach Zusammensetzung bei 50°C entweder 1,1 oder 1,5 Gew.-% Verzögerer zugegeben werden. D.h. die Menge an Verzögerer ist bevorzugt im Bereich von 0,1 bis 1,5 Gew.-%, bezogen auf das Gesamtgewicht an Zement. Dadurch kann unabhängig von der Aussentemperatur die Verarbeitung der Zusammensetzung innerhalb des annähernd gleichen Zeitraums erfolgen.

Beispiele für Verflüssiger sind Weichmacher wie die Produkte der Umsetzung von Polycarbonpolymeren mit monofunktionalen Polyethern, wie sie beispielsweise in der WO 2011/076655 der Mapei S.P.A. offenbart werden. Bevorzugt wird als Verflüssiger Mapefluid R440 der Firma Mapei S.P.A., Italien, eingesetzt.

Die Menge an Verflüssiger ist abhängig von der Nassdichte. Im allgemeinen wird bei höheren Nassdichten weniger Verflüssiger zugegeben. Bei Zusammensetzungen, die eine hohe Fliessfähigkeit aufweisen, wird mehr Verflüssiger zugegeben. Bevorzugt wird Verflüssiger in einer Menge von 0,4 bis 1,7 Gew.-% bei einer Nassdichte im Bereich von 100 bis 400 kg/m³, in einer Menge von 0,2 bis 1,2 Gew.-% bei einer Nassdichte im Bereich von 400 bis 800 kg/m³, sowie in einer Menge von 0,2 bis 0,9 Gew.-% bei einer Nassdichte im Bereich von 800 bis 1250 kg/m³ zugegeben; besonders bevorzugt wird Verflüssiger in einer Menge von 0,45 bis 1,6 Gew.-% bei einer Nassdichte im Bereich von 100 bis 400 kg/m³, in einer Menge von 0,25 bis 1,1 Gew.-% bei einer Nassdichte im Bereich von 400 bis 800 kg/m³ sowie in einer Menge von 0,25 bis 0,8 Gew.-% bei einer Nassdichte im Bereich von 800 bis 1250 kg/m³ zugegeben; ganz besonders bevorzugt wird Verflüssiger in einer Menge von 0,5 bis 1,5 Gew.-% bei einer Nassdichte im Bereich von 100 bis 400 kg/m³, in einer Menge von 0,3 bis 1,0 Gew.-% bei einer Nassdichte im Bereich von 400 bis 800 kg/m³ sowie in einer Menge von 0,3 bis 0,75 Gew.-% bei einer Nassdichte im Bereich von 800 bis 1250 kg/m³ zugegeben.

In manchen Zusammensetzungen ist der Verflüssiger auch abhängig von der Aussentemperatur, bei der die Zusammensetzung verarbeitet wird. Hier wird ebenso wie beim Verzögerer ausgehend von einem Startwert, der von der Zusammensetzung und deren Verwendungszweck abhängig ist, bei einer Temperaturerhöhung um 1 K jeweils 0,02 Gew.-% mehr Verflüssiger zugegeben.

Es ist eine Besonderheit des weiter unten beschriebenen Verfahrens zur Herstellung der Zusammensetzung, dass der Verzögerer und der Verflüssiger auf 0,02 Gew.-% genau zudosiert werden können, wobei die von der Dosierpumpe abhängige Abweichung bei nur 2-3% dieses Wertes liegt.

Beispiele für flüssige Schaummittel v) sind organische Tenside, die insbesondere bei einer Temperatur im Bereich von -3 bis 50°C flüssig sind. Derartige Produkte werden beispielsweise von den Firmen Mapei S.P.A. (Italien) und Sika AG (Schweiz) unter den Handelsnamen Mapeair LA/L und Sika^{®} Lightcrete-400 vertrieben. Bevorzugt wird als Schaummittel Mapeair LA/L der Firma Mapei S.P.A., Italien, eingesetzt.

Die Menge an flüssigem Schaummittel ist insbesondere im Bereich von 10 bis 50 g pro 1 Liter Wasser, bevorzugt im Bereich von 20 bis 40 g pro 1 Liter Wasser, besonders bevorzugt im Bereich von 25 bis 35 g pro 1 Liter Wasser, ganz besonders bevorzugt im Bereich von 28 bis 32 g pro 1 Liter Wasser. Auch hier kann auf 2-3% genau dosiert werden.

Die Menge der einzelnen Komponenten i) bis vi) kann sehr genau dosiert werden. So ist es möglich, bei Ausseneinsätzen die Zusammensetzung des Betons, insbesondere des Porenleichtbetons, des Mörtels, insbesondere des 3D Druckmörtels, des Fliessestrichs und der Spachtelmasse durch Mischen der einzelnen Komponenten mit vor Ort verfügbarem Wasser an die Umgebungsbedingungen anzupassen. Daher kann man durch Bestimmung des Feuchtigkeitsgehalts der Umgebung den Wassergehalt sowie die Zudosierung der benötigten, einzelnen Komponenten entsprechend optimieren. Je nach der Aussen- und der Umgebungstemperatur wird auch die Menge einzelner Komponenten zudosiert und so an die Aussen- und Umgebungsbedingungen angepasst.

In der erfindungsgemässen Zusammensetzung ist das Gewichtsverhältnis von Wasser zu Zement bevorzugt im Bereich von 0,2 : 1 zu 0,6 : 1. Für Beton, insbesondere für Porenleichtbeton, ist das Gewichtsverhältnis von Wasser zu Zement bevorzugt im Bereich von 0,2 : 1 bis 0,4 : 1, während es für Fliessestrich, 3D Druckmörtel oder Spachtelmasse bevorzugt im Bereich von 0,3 : 1 bis 0,55 : 1 ist.

Durch die individuelle Dosierung der einzelnen Komponenten ist es möglich diverse Einstellungen wie Abbinde-Verhalten, Fliessverhalten und Raumgewicht so einzustellen wie es vom Kunden gewünscht wird.

Die Merkmale der oben erwähnten bevorzugten Ausführungsformen können beliebig miteinander in einer Zusammensetzung kombiniert werden, und sind von der vorliegenden Erfindung mitumfasst.

### Bevorzugte Ausführungsformen der erfindungsgemässen Zusammensetzung

In einer bevorzugten Ausführungsform einer erfindungsgemässen Zusammensetzung zur Herstellung von Beton, insbesondere zur Herstellung von Porenleichtbeton, ist die pulverförmige Hauptkomponente i) 52,5 R Zement und die erste pulverförmige Nebenkomponenten ii) CSA-Zement. Das Gewichtsverhältnis der Komponente i) zu der Komponente ii) ist hierbei bevorzugt im Bereich von 4 : 1 bis 1,3 : 1. Die Menge an Verzögerer ist bevorzugt im Bereich von 0,1 bis 1,5 Gew.-%, bezogen auf das Gesamtgewicht an Zement. Der Verflüssiger wird bevorzugt in einer Menge von 0,5 bis 1,5 Gew.-% bei einer Nassdichte im Bereich von 100 bis 400 kg/m³, in einer Menge von 0,3 bis 1,0 Gew.-% bei einer Nassdichte im Bereich von 400 bis 800 kg/m³ sowie in einer Menge von 0,3 bis 0,75 Gew.-% bei einer Nassdichte im Bereich von 800 bis 1250 kg/m³ zugegeben. Die Menge an flüssigem Schaummittel ist bevorzugt im Bereich von 25 bis 35 g pro 1 Liter Wasser, besonders bevorzugt im Bereich von 28 bis 32 g pro 1 Liter Wasser.

Werden aus dieser bevorzugten Zusammensetzung mit unterschiedlichen Nassdichten Porenleichtbeton-Würfel mit 150 mm Nenn-Kantenlänge hergestellt, so weisen diese die folgenden Eigenschaften auf:

**Tabelle 0:**

| Nassdichte [kg/m³] | Druckfestigkeit nach 7 Tagen [N/mm²] | Druckfestigkeit nach 14 Tagen [N/mm²] | Druckfestigkeit nach 28 Tagen [N/mm²] | Bevorzugte Druckfestigkeit nach 28 Tagen [N/mm²] |
|---|---|---|---|---|
| 200 | 0,1 | 0,1 | 0,1 | 0,06-0,14 |
| 250 | 0,2 | 0,3 | 0,3 | 0,16-0,34 |
| 300 | 0,3 | 0,4 | 0,4 | 0,26-0,44 |
| 400 | 1,0 | 1,0 | 1,0 | 0,6-1,4 |
| 500 | 1,8 | 1,9 | 2,0 | 1,5-2,5 |
| 600 | 3,0 | 2,8 | 3,0 | 2,5-3,5 |
| 700 | 3,1 | 3,5 | 3,3 | 3,0-4,0 |
| 800 | 4,3 | 5,3 | 5,1 | 4,0-5,8 |
| 900 | 5,9 | 5,9 | 6,0 | 5,0-6,5 |
| 1000 | 7,1 | 7,0 | 7,5 | 6,6-8,0 |

Die vorliegende Erfindung ist auch gerichtet auf ein Verfahren zur Herstellung der erfindungsgemässen Zusammensetzung, welches die folgenden Schritte umfasst:
a) Einbringen der mindestens einen flüssigen Nebenkomponente iv) in Wasser, vorzugsweise über eine Dosierpumpe, und Mischen dieser Nebenkomponente und Wasser zu einer wässrigen Mischung;
b) optional Einbringen des mindestens einen flüssigen Schaummittels v) in Wasser und Mischen mit Luft, um Schaum herzustellen;
c) Einbringen der weiteren Komponenten i), ii) und iii) in einen ersten Mischer, vorzugsweise über einzelne, separate Dosierpumpen, und Mischen mit der in Schritt a) hergestellten wässrigen Mischung zu einem Slurry;
d) weiteres Mischen des in Schritt c) hergestellten Slurrys in einem zweiten Mischer, optional unter Zugabe des in Schritt c) hergestellten Schaumes, zu der Zusammensetzung;
e) Entnehmen der Zusammensetzung aus dem zweiten Mischer.

Bevorzugt werden die Schritte a) bis e) kontinuierlich durchgeführt, besonders bevorzugt werden die Schritte a) und b) zeitgleich kontinuierlich durchgeführt. Es ist jedoch auch möglich die Schritte a) bis e) batch-weise durchzuführen.

Ist die erfindungsgemässe Zusammensetzung eine Zusammensetzung zur Herstellung von Beton, insbesondere eine Zusammensetzung zur Herstellung von Porenleichtbeton, so wird Schritt b) durchgeführt, und das weitere Mischen in Schritt d) erfolgt unter Zugabe des in Schritt c) hergestellten Schaumes.

Die Schritte b), c) und d) werden nun näher erläutert:
Schritt b): Die Herstellung des Schaums aus dem mindestens einen flüssigen Schaummittel und Wasser erfolgt bevorzugt in einem Schaumgenerator, in dem das mindestens eine flüssige Schaummittel und das Wasser unter Zugabe von Luft miteinander vermischt werden. Insbesondere kann der Schaum auch in einer Vorrichtung wie in NL-A 9302111 beschrieben erzeugt werden.
Schritt c): Das Einbringen der Komponenten i), ii) und iii) in den ersten Mischer, bevorzugt in einen Durchlaufmischer, erfolgt bevorzugt über eine Zellenradschleuse in einen Pumpentrichter sowie einen Weitertransport über eine nachgeschaltete Förderschnecke. Die Zellenradschleuse ist vorteilhafterweise mit zwei Sonden ausgestattet, um die Mengen der Komponenten i), ii) und iii) dosiert zugeben zu können. So schaltet eine Sonde die Zellenradschleuse ab, wenn ein bestimmtes oberes Füllniveau erreicht ist, und eine weitere Sonde die Zellenradschleuse wieder an, wenn ein gewisses unteres Füllniveau unterschritten wird.
   Das Mischen der Komponenten i), ii) und iii) mit der in Schritt a) hergestellten wässrigen Mischung zu einem Slurry erfolgt bevorzugt in einer Mörtelmischpumpe wie in WO 2004/080 676 zur Herstellung von Beton-Slurry beschrieben.
   Der in Schritt c) hergestellte Slurry ist vorzugsweise eine homogene, thixotrope Masse.
Schritt d): Der in Schritt c) hergestellte Slurry wird vorzugsweise über einen Schlauch zu einem zweiten Mischer, vorzugsweise einem statischen Mischer, gepumpt, wobei der Schlauch bevorzugt zwischen Pumpenausgang und zweitem Mischer ein T-Stück aufweist, durch das optional der in Schritt b) hergestellte Schaum zugemischt wird. Alternativ kann der Pumpenausgang auch eine Schaumeinspritzung aufweisen. Besonders bevorzugt erfolgt die weitere Durchmischung des Slurrys und des Schaums nicht nur in einem, sondern in zwei statischen Mischern, die hintereinander geschaltet sind. Statt eines statischen Mischers kann auch ein elektrischer Mischer verwendet werden.

Die Merkmale der oben erwähnten bevorzugten Ausführungsformen können beliebig miteinander in einem Verfahren kombiniert werden, und sind von der vorliegenden Erfindung mitumfasst.

Trocknet die so hergestellte erfindungsgemässe Zusammensetzung, so wird dadurch Beton, insbesondere Porenleichtbeton, Fliessestrich, 3D Druckmörtel und Spachtelmasse erhalten. D.h. die vorliegende Erfindung umfasst auch die Verwendung der getrockneten erfindungsgemässen Zusammensetzung als Beton, insbesondere als Porenleichtbeton, als Fliessestrich, 3D Druckmörtel oder Spachtelmasse.

Die Erfindung wird nun anhand der folgenden, nicht limitierenden Beispiele näher beschrieben.

### Beispiele

Als Schaummittel wird in den folgenden Beispielen Mapeair LA/L eingesetzt, als Verzögerer Mapetard VZ und als Verflüssiger Mapefluid R440. Alle drei Substanzen sind von der Firma Mapei S.P.A., Italien, kommerziell erhältlich.

### Beispiele 1 -3: Herstellung von Porenleichtbeton mit 52,5 R und CSA Zement

In Tabelle 1 ist die Zusammensetzung beispielhaften Porenleichtbetons gemäss der vorliegenden Erfindung gegeben.

Die in Tabelle 1 angegebene Menge an Verflüssiger, bezogen auf das Gesamtgewicht an Zement, wird zu Wasser dosiert; sie ist temperaturunabhängig. Die Menge an Verzögerer ist temperaturabhängig und wird ebenfalls in der in Tabelle 1 angegebenen Menge zu Wasser dosiert. Dies ermöglicht eine Verarbeitung des Porenleichtbetons in einem Zeitraum von 30 bis 120 min.

Aus Wasser und Schaummittel wird Schaum hergestellt. Die Menge an Wasser ist der Tabelle 1 zu entnehmen. Die Menge an Schaummittel beträgt 30 g pro 1 I Wasser, d.h. 1,5 kg pro 1 m³ Wasser.

Als Zement wird eine Mischung von 52,5 R Zement und CSA-Zement in dem in Tabelle 1 angegebenen Gewichtsverhältnis verwendet. Die Gesamtmenge an Zement beträgt je nach Nassdichte zwischen 42 kg pro 100 kg Zusammensetzung bei einer Nassdichte von 100 kg/m³ und 920 kg pro 1250 kg Zusammensetzung bei einer Nassdichte von 1250 kg/m³, d.h. die Gesamtmenge an Zement in kg ist im Bereich von 42 % bis 73,6% der Nassdichte in kg/m³.

Je nach der erwünschen Nassdichte wird die oben genannte Gesamtmenge an Zement mit dem Wasser, das den Verflüssiger und Verzögerer in den in Tabelle 1 angegebenen Mengen enthält, vorzugsweise in einer Förderschnecke, zu einem Slurry gemischt. Das Gewichtsverhältnis von Wasser zu Zement ist hierbei im Bereich von 0,20 : 1 bis 0,33 : 1.

Dieser Slurry wird anschliessend nach der Förderschnecke mit dem Schaum zu der erfindungsgemässen Zusammensetzung gemischt, wobei das Gewichtsverhältnis von Wasser zu Zement idealerweise 0,35 ist. Je nach gewünschter Rohdichte wird mehr oder weniger Schaum dazu gemischt. Die Homogenisierung der Mischung erfolgt dann in dem der Förderschnecke nachgeschalteten statischen Mischer. Vorzugsweise erfolgt die Mischung in zwei hinter einander geschalteten statischen Mischern.

Dadurch wird die Zusammensetzung zur Herstellung von Beton, insbesondere von Porenleichtbeton, erhalten, dessen Nassdichte 100-1250 kg/m³ ist.

### Beispiele 4-6: Herstellung von Porenleichtbeton mit 52,5 R und CSA Zement

**Tabelle 2** enthält weitere Beispiele für erfindungsgemässen Porenleichtbeton. Die Herstellung erfolgt analog zu der für die Beispiele 1-3 beschriebenen Herstellung. Im Gegensatz zu den Beispielen 1-3 wird in den Zusammensetzungen gemäss den Beispielen 4-6 mehr Verflüssiger verwendet. Der Gesamt-Zement-Anteil ist auch hier, je nach Nassdichte, in einem Bereich von 42 kg bei einer Nassdichte von 100 kg/m³ und 920 kg bei einer Nassdichte von 1250 kg/m³, d.h. die Gesamtmenge an Zement in kg ist im Bereich von 42 bis 73,6% der Nassdichte in kg/m³.

### Beispiele 1 A-6A: Herstellung von Porenleichtbeton mit 52,5 R und CSA Zement

Die Beispiele 1-6 werden dahingehend modifiziert, dass der Anteil des CSA-Zements nicht auf die Menge an 52,5 R Zement bezogen wird, sondern auf den darin enthaltenen Klinkeranteil von 87 Gew.-%. D.h. in den Beispielen 1A-6A wird mehr CSA-Zement verwendet als in den Beispielen 1-6.

### Beispiele 7-30: Herstellung von Porenleichtbeton mit 52,5 R und CSA Zement

Die Herstellung erfolgt analog zu der für die Beispiele 1-3 beschriebenen Herstellung. Die entsprechenden Parameter und Bedingungen sind **Tabelle 3** zu entnehmen

Die Menge an Wasser für die Herstellung von 1 m³ Schaum in kg entspricht dem Wert der Nassdichte in kg/m³ - 50 kg/m³. Das Gewichtsverhältnis Verzögerer zu Zement [%] ist 0,1-1,1 für eine Temperatur von 0 bis 50°C, wobei für eine Temperaturdifferenz von 5 K jeweils 0,1 Gewichts-% mehr Verzögerer zugegeben werden.

Das Gewichtsverhältnis von 52,5 R Zement zu CSA Zement ist 2,33. Es werden also beispielsweise 70 kg 52,5 R Zement und 30 kg CSA Zement eingesetzt.

### Beispiele 7A-30A: Herstellung von Porenleichtbeton mit 52,5 R und Calciumaluminat Zement

Der CSA Zement in den Beispielen 7-30 wird durch Calciumaluminat-Zement der Firma Hamitech AG oder durch Ciment Fondu^{®} der Firma LAFARGE ZEMENT ersetzt.

### Beispiele 31-54: Herstellung von Porenleichtbeton mit 52,5 R Zement und CSA Zement

Die Herstellung erfolgt analog zu der für die Beispiele 1-3 beschriebenen Herstellung. Die entsprechenden Parameter und Bedingungen sind **Tabelle 4** zu entnehmen. Hier wird die Menge an Verzögerer jedoch auf 1 K genau angepasst, d.h. ausgehend von einer Menge von 0,1 Gew.-% Verzögerer, bezogen auf das Gesamtgewicht an Zement, bei 0°C werden bis zu einer Temperatur von 50°C jeweils 0,02 Gewichts-% mehr Verzögerer zugegeben.

Die Menge an Wasser für die Herstellung von 1 m³ Schaum in kg entspricht dem Wert der Nassdichte in kg/m³ - 50 kg/m³.

Im Gegensatz zu den Beispielen 7-30 wird hier die Menge an CSA-Zement auf den Anteil an Klinker (ca. 87 Gew.-%) im 52,5 R Zement bezogen. D.h. das Gewichtsverhältnis des Klinkers im 52,5 R Zement zu CSA Zement ist 2,33 : 1.

### Beispiele 31 A-54A: Herstellung von Porenleichtbeton mit 52,5 R Zement, CSA Zement und Tonerdezement

Hier wurde - im Vergleich zu den Beispielen 31-54 - zusätzlich Calciumaluminat-Zement der Firma Hamitech AG oder Ciment Fondu^{®} der Firma LAFARGE ZEMENT eingesetzt, wobei das Gewichtsverhältnis des Klinkers im 52,5 R Zement zu CSA-Zement zu Calciumaluminat-Zement/Ciment Fondu^{®} = 7,7 : 3,8 : 1 ist.

### Beispiele 55-78: Herstellung von Porenleichtbeton mit 52,5 R Zement und CSA Zement ohne Verflüssiger

Die Herstellung erfolgt analog zu der für die Beispiele 1-3 beschriebenen Herstellung. Die entsprechenden Parameter und Bedingungen sind **Tabelle 5** zu entnehmen.

Im Gegensatz zu den Beispielen 7-30 und 31-54 enthalten die folgenden Porenleichtbeton-Beispiele 55-78 keinen Verflüssiger. Zudem wird mehr Wasser als in den Beispielen 7-54 für die Schaumherstellung eingesetzt, und zwar ist die Menge an Wasser in kg für die Herstellung von 1 m³ Schaum der Wert der Nassdichte in kg/m³.

Genau wie bei den Beispielen 31-54 (Tabelle 4) wird die Menge an Verzögerer auf 1 K genau angepasst, jedoch wird mehr Verzögerer eingesetzt, und zwar wird ausgehend von einer Menge von 0,5 Gew.-% Verzögerer, bezogen auf das Gesamtgewicht an Zement, bei 0°C bis zu einer Temperatur von 50°C jeweils 0,02 Gewichts-% mehr Verzögerer zugegeben. Das Gewichtsverhältnis von 52,5 R Zement zu CSA Zement ist 2,33 : 1.

### Beispiele 55A-78A: Herstellung von Porenleichtbeton mit 52,5 R Zement, CSA-Zement und Tonerdezement ohne Verflüssiger

Bei den Beispielen 55-78 wurde der CSA-Zement teilweise durch Tonerdezement ersetzt; das Gewichtsverhältnis von 52,5 R Zement zu CSA-Zement zu Tonerdezement ist 7,7 : 3,8 : 1.

### Beispiele 79-92: Herstellung von Porenleichtbeton mit 52,5 R Zement und CSA-Zement ohne Verflüssiger

Im Gegensatz zu den Beispielen 55-78 wird hier die Menge an CSA-Zement auf den Anteil an Klinker (87 Gew.-%) im 52,5 R Zement bezogen. D.h. das Gewichtsverhältnis des Klinkers im 52,5 R Zement zu CSA-Zement ist 2,33 : 1.

### Beispiele 79A-92A: Herstellung von Porenleichtbeton mit 52,5 R Zement, CSA Zement und Tonerdezement ohne Verflüssiger

Im Gegensatz zu den Beispielen 55A-78A wird hier die Menge an CSA- und Tonerde-Zement auf den Anteil an Klinker (87 Gew.-%) im 52,5 R Zement bezogen. D.h. das Gewichtsverhältnis des Klinkers im 52,5 R Zement zu CSA-Zement zu Tonerdezement ist 7,7 : 3,8 : 1.

### Beispiele 93-98: Herstellung von feuerfestem Porenleichtbeton

Anstelle eines Gemisches von 52,5 R Zement und CSA-Zement wird hier eine Mischung von 52,5 R Zement, CSA-Zement und einem Calciumaluminat-Klinker wie Ciment Fondu^{®} im Gewichtsverhältnis 6,66 : 1 : 1 eingesetzt. Weitere Bedingungen sind den **Tabellen 6 und 7** zu entnehmen. Ansonsten erfolgt die Herstellung wie unter Beispiel 1-3 beschrieben. Die Menge an Schaummittel beträgt 30 g pro 1 l Wasser.

Das Gewichtsverhältnis von Wasser zur Gesamtmenge an Zement in der Zusammensetzung, d.h. der Mischung von Zement, Verflüssiger, Verzögerer, Wasser und Schaum, nach dem Mischen, ist im Bereich von 0,20 bis 0,35. Die Menge an Wasser für die Herstellung von 1 m³ Schaum in kg entspricht in Beispiel 94 dem Wert der Nassdichte in kg/m³ und in den Beispielen 93 und 95-98 dem Wert der Nassdichte in kg/m³ - 50 kg/m³.

### Beispiele 99-104: Herstellung von Porenleichtbeton, der bei Aussentemperaturen bis zu -3°C verarbeitbar ist

Um die Zusammensetzung auch bei tieferen Umgebungstemperaturen verarbeiten zu können, wird ein Teil des CSA-Zements durch Tonerdeschmelzzement ersetzt. Die Herstellung erfolgt analog zu der Herstellung der erfindungsgemässen Zusammensetzungen nach den Beispielen 1-3. Weitere Details sind den **Tabelle 8 und 9** zu entnehmen.

Bei einer Nassdichte über 400 kg/m³ kann die Verarbeitung sogar bei einer Umgebungstemperatur unter 0°C, bevorzugt bei -3°C erfolgen.

Die Menge an Wasser für die Herstellung von 1 m³ Schaum in kg entspricht dem Wert der Nassdichte in kg/m³ - 50 kg/m³. Die Menge an Schaummittel beträgt 30 g pro 1 l Wasser.

### Beispiel 1 *: Messung der Druckfestigkeiten von erfindungsgemässem Porenleichtbeton

Von nach Beispiel 1 hergestellten Zusammensetzungen zur Herstellung von Porenleichtbeton werden gemäss der Norm SN EN 12390-3 Würfel mit 150 mm Nenn-Kantenlänge hergestellt. Diese werden entweder im Feuchtraum bei 20°C ± 2°C und einer relativen Feuchtigkeit ≥ 95% oder abgedeckt mit Plastikfolie bei 20°C bis zur Messung gelagert. Die Druckfestigkeit wird jeweils nach 7, 14 und 28 Tagen bestimmt. Die Ergebnisse sind den nachfolgenden Tabellen I und II zu entnehmen. Die angegebenen Werte sind jeweils die Mittelwerte aus drei Messungen.

**Tabelle I**

| Beispiel | Nassdichte [kg/m³] | Druckfestigkeit nach 7 Tagen [N/mm²] | Druckfestigkeit nach 14 Tagen [N/mm²] | Druckfestigkeit nach 28 Tagen [N/mm²] |
|---|---|---|---|---|
| 1 | 200 | 0.1 | 0.1 | 0.1 |
| 1 | 250 | 0.2 | 0.3 | 0.3 |
| 1 | 300 | 0.3 | 0.4 | 0.4 |
| 1 | 400 | 1.0 | 1.0 | 1.0 |
| 1 | 500 | 1.8 | 1.9 | 2.0 |
| 1 | 600 | 3.0 | 2.8 | 3.0 |
| 1 | 700 | 3.1 | 3.5 | 3.3 |
| 1 | 800 | 4.3 | 5.3 | 5.1 |
| 1 | 900 | 5.9 | 5.9 | 6.0 |
| 1 | 1000 | 7.1 | 7.0 | 7.5 |

### Beispiele 105-111: Herstellung von 3D-Druckmörtel

Die Beispiele sind in **Tabelle 10** zusammengefasst.

3D-Druckmörtel enthält weder einen Verflüssiger noch ein Schaummittel.

Der Verzögerer wird in der in Tabelle 10 angegebenen Menge zu 281 Litern Wasser dosiert. Die Dosierung erfolgt hierbei temperaturabhängig. Dies ermöglicht eine Verarbeitung der 3D Druckmörtelmasse in einem Zeitraum von 1 bis 30 min, je nach Drucklänge.

Sand und Zement werden in dem in Tabelle 10 angegebenen Gewichtsverhältnis miteinander gemischt. Als Sand kann sowohl feuergetrockneter Quarzsand, als auch Brechsand mit einer Korngrösse von 0 bis 1 mm eingesetzt werden. Als Zement wird eine Mischung von 52,5 R Zement und CSA-Zement (Beispiele 105-107 und 110-111) oder eine Mischung von 42,5 R Zement und CSA-Zement (Beispiele 108-109) in dem in Tabelle 10 angegebenen Gewichtsverhältnis verwendet. In den Beispielen 110 und 111 ist die Hälfte bzw. die komplette Menge des CSA-Zements durch Tonerdezement ersetzt worden.

In Beispiel 106 und 107 wird zusätzlich pulverförmige Glasfaser bzw. in Beispiel zusätzlich 108 und 109 Eisenoxidpulver und/oder pulverförmiges Farbmittel, jeweils in der in Tabelle 10 angegebenen Menge, zu der Sand-Zement-Mischung gegeben, und diese Mischung der pulverförmigen Komponenten dann mit Wasser angemischt, wobei das Gewichtsverhältnis von Wasser zu Zement im Bereich von 0,1 bis 0,50 zu 1 ist, d.h. auf 28-30 kg Gesamtmenge an Zement werden 9,8 bis 15,75 I Wasser gemischt. Die wässrige Mischung enthaltend den Verzögerer wird dann zu der wässrigen Sand-Zement-Mischung gegeben, welche gegebenenfalls zusätzlich Glasfaser (Beispiele 106, 107) bzw. Eisenoxidpulver und/oder Farbmittel (Beispiele 108, 109) enthält. Je nach eingesetztem Eisenoxid wird entweder ein weisser 3D-Druckmörtel (Beispiel 108) oder ein schwarzer 3D-Druckmörtel (Beispiel 109) erhalten. Durch Mischen wird die 3D Druckmörtelmasse erhalten, deren Nassdichte je nach Zusammensetzung im Bereich von 1800 bis 2200 kg/m³ ist. Das Mischen der Komponenten kann beschleunigt werden, indem vorgeheiztes Wasser, insbesondere auf eine Temperatur im Bereich von 6 bis 50°C vorgeheiztes Wasser, eingesetzt wird. Die Schwundreduktion beim Aushärten beträgt 1 Volumen-%.

### Beispiele 112-116: Herstellung von Fliessestrich

Die Beispiele sind in **Tabelle 11** zusammengefasst.

Fliessestrich unterscheidet sich im Wesentlichen dadurch von 3D Druckmörtel, dass Verflüssiger in der Mischung enthalten ist.

1 Gew.-% Verflüssiger, bezogen auf das Gesamtgewicht an Zement, werden zu Wasser dosiert, ebenso wie separat davon Verzögerer. Die Menge an Verzögerer ist temperaturabhängig: Bei 0°C werden 0,1 Gew.-% Verzögerer, bezogen auf das Gesamtgewicht an Zement, zu Wasser dosiert. Bei einem Temperaturanstieg von 5 K werden jeweils 0,1 Gewichts-% mehr Verzögerer zugegeben, so dass bei einer Temperatur von 50°C 1,1 Gew.-% an Verzögerer, bezogen auf das Gesamtgewicht an Zement, zu Wasser dosiert werden. Dies ermöglicht eine Verarbeitung des Fliessestrichs in einem Zeitraum von 15 bis 100 min, 15 bis 50 min.

Es werden jeweils 73 kg Sand mit 27 kg Zement gemischt, so dass das Gewichtsverhältnis von Sand zu Zement 2,70 : 1 beträgt. Es ist auch möglich, Mischungen zu verwenden, wobei das Gewichtsverhältnis von Sand zu Zement im Bereich von 4:1 bis 2:1 ist. Als Sand kann sowohl feuergetrockneter Quarzsand, als auch Brechsand mit einer Korngrösse von 0.1 bis 0.5 mm 0.5 bis 1.25 mm, 1.25 bis 4 mm eingesetzt werden. Als Zement wird eine Mischung von 52,5 R Zement und CSA-Zement (Beispiele 112, 113, 114, 116) oder eine Mischung von 42,5 R Zement und CSA-Zement (Beispiel 115) verwendet, wobei das Gewichtsverhältnis von 52,5 R Zement bzw. 42,5 R Zement zu CSA-Zement 2,33 zu 1 ist. Alternativ könnte man auch 32,5 R-Zement einsetzen.

In Beispiel 113 und 114 werden zusätzlich pulverförmige Glasfaser bzw. in Beispiel zusätzlich 115 und 116 Eisenoxidpulver und/oder pulverförmiges Farbmittel in der in Tabelle 11 angegebenen Menge zu der Sand-Zement-Mischung gegeben, und diese Mischung der pulverförmigen Komponenten dann mit Wasser angemischt, wobei das Gewichtsverhältnis von Wasser zu Zement im Bereich von 0,4 bis 0,55 zu 1 ist, d.h. auf 40 kg Gesamtmenge an Zement werden 16,8 bis 25,2 I Wasser gemischt. Je nach eingesetztem Eisenoxid wird entweder ein weisser Fliessestrich (Beispiel 115) oder ein schwarzer Fliessestrich (Beispiel 116) erhalten. Die wässrige Mischung enthaltend den Verzögerer und den Verflüssiger wird dann zu der wässrigen Sand-Zement-Mischung gegeben, welche gegebenenfalls zusätzlich Glasfaser (Beispiele 113, 114) bzw. Eisenoxidpulver und/oder Farbmittel (Beispiele 115, 116) enthält, um den Fliessestrich zu erhalten, dessen Nassdichte 2000-2200 kg/m³ ist. Die Schwundreduktion des Fliessestrichs beim Aushärten beträgt 1 Volumen-%. Der Einbau des Fliessestrichs kann in einer Dicke von 10-100 mm erfolgen. Ab 20 mm wird auf Trennlage und ab 30 mm schwimmend verbaut.

### Beispiele 117-122: Herstellung von Spachtelmasse

Die Beispiele sind in **Tabelle 12** zusammengefasst.

2 Gew.-% Verflüssiger, bezogen auf das Gesamtgewicht an Zement, werden zu Wasser dosiert. Die Menge an Verzögerer ist temperaturabhängig: 0,1 Gew.-% Verzögerer, bezogen auf das Gesamtgewicht an Zement, werden bei 0°C zu Wasser dosiert. Bei einem Temperaturanstieg von 5 K werden jeweils 0,1 Gewichts-% mehr Verzögerer zugegeben, so dass bei einer Temperatur von 50°C 1,1 Gew.-% an Verzögerer, bezogen auf das Gesamtgewicht an Zement, zu Wasser dosiert werden. Dies ermöglicht eine Verarbeitung der Spachtelmasse in einem Zeitraum bis zu 30 min.

Es werden jeweils 60 kg Sand mit 40 kg Zement gemischt, so dass das Gewichtsverhältnis von Sand zu Zement 1,5 : 1 beträgt. Als Sand kann sowohl feuergetrockneter Quarzsand, als auch Brechsand mit einer Korngrösse von 0 bis 0.5 mm eingesetzt werden. Als Zement wird eine Mischung von 52,5 R Zement und CSA-Zement (Beispiele 117, 118, 119) oder eine Mischung von 42,5 R Zement und CSA-Zement (Beispiele 120, 121, 122) verwendet, wobei das Gewichtsverhältnis von 52,5 R Zement bzw. 42,5 R Zement zu CSA-Zement 2,33 zu 1 ist.

In Beispiel 118 und 119 wird zusätzlich 0.5 bzw. 1 Gew.% an pulverförmiger Glasfaser bzw. in Beispiel 120, 121 und 122 zusätzlich 5 Gew.-% bzw. 1 Gew.-% bzw. 1 Gew.-% Eisenoxidpulver und/oder pulverförmiges Farbmittel zu der Sand-Zement-Mischung gegeben. Je nach eingesetztem Eisenoxid wird entweder eine weisse Spachtelmasse (Beispiel 120) oder eine schwarze Spachtelmasse (Beispiel 121) erhalten. Die Mischung der pulverförmigen Komponenten erfolgt vorteilhafterweise vorab im Werk. Diese Mischung der pulverförmigen Komponenten wird dann mit Wasser angemischt, wobei das Gewichtsverhältnis von Wasser zu Zement im Bereich von 0,35 bis 0,45 zu 1 ist, d.h. auf 40 kg Gesamtmenge an Zement werden 14,0 bis 18,2 I Wasser gemischt. Die wässrige Mischung enthaltend den Verzögerer und den Verflüssiger wird dann zu der wässrigen Sand-Zement-Mischung gegeben, welche gegebenenfalls zusätzlich Glasfaser (Beispiele 118, 119) bzw. Eisenoxidpulver und/oder Farbmittel (Beispiele 120, 121, 122) enthält. Dadurch wird die Spachtelmasse erhalten, deren Nassdichte 1900-2000 kg/m³ ist. Die Schwundreduktion der Spachtelmasse beim Aushärten beträgt 1 Volumen-%.

**Beispiele 1-3: Herstellung von Porenleichtbeton: Tabelle 1**

| **Beispiel/ Komponenten und Parameter** | **Besondere Eigenschaften** | **Nassdichte [kg/m³]** | **Menge an Wasser für die Schaumherstellung [kg Wasser pro 1 m³ Schaum]** | **Gewichtsverhältnis Zement 52,5 R zu CSA Zement** | **Gewichtsverhältnis Verzögerer zu Zement [%]** | **Menge an Verflüssiger [Gewichtsverhältnis zum Gesamtgewicht an Zement in %]** |
|---|---|---|---|---|---|---|
| **1** | - | 100-1250 | Wert der Nassdichte in kg/m³ - 50 kg/m³ | 2,33 | 0.1-1.1 für eine Temperatur von 0 bis 50°C wobei für eine Temperaturdifferenz von 5 K jeweils 0.1 Gewichts-% mehr | 0.5 für eine Nassdichte von 100-799 kg/m³; |
| | | | | | | 0.3 für eine Nassdichte von 800-1250 kg/m³ |
| **2** | Standfest bei einem Gefälle bis zu 3% | 100-1250 | Wert der Nassdichte in kg/m³ - 50 kg/m³ | 3,85 | 0.5-1.5 für eine Temperatur von 0 bis 50°C wobei für eine Temperaturdifferenz von 5 K jeweils 0.1 Gewichts-% mehr Verzögerer zugegeben werden | - |
| **3** | Hoch fliessfähig | 100-1250 | Wert der Nassdichte in kg/m³ - 50 kg/m³ | 2,33 | 0.1-1.1 für eine Temperatur von 0 bis 50°C wobei für eine Temperaturdifferenz von 5 K jeweils 0.1 Gewichts-% | 1.5 für eine Nassdichte von 100-399 kg/m³; |
| | | | | | | 1.0 für eine Nassdichte von 400-799 kg/m³; |
| | | | | | mehr Verzögerer zugegeben werden | 0.75 für eine Nassdichte von 800-1200 kg/m³ |

**Beispiele 4-6: Herstellung von Porenleichtbeton: Tabelle 2**

| **Beispiel/ Komponenten und Parameter** | **Eigenschaften** | **Nassdichte [kg/m³]** | **Menge an Wasser für die Schaumherstellung [kg Wasser pro 1 m³ Schaum]** | **Gewichtsverhältnis Zement 52,5 R zu CSA Zement** | **Gewichtsverhältnis Verzögerer zu Zement [%]** | **Menge an Verflüssiger [Gewichtsverhältnis zur Gesamtmenge an Zement in %]** |
|---|---|---|---|---|---|---|
| **4** | | 100-1200 | Wert der Nassdichte in kg/m³ - 50 kg/m³ | 3,85 | 0.1-1,1 für eine Temperatur von 0 bis 50°C wobei für eine Temperaturdifferenz von 5 K jeweils 0.1 Gewichts-% mehr Verzögerer zugegeben werden | 0.5-1.5 für eine Temperatur von 0 bis 50°C wobei für eine Temperaturdifferenz von 5 K jeweils 0.1 Gewichts-% mehr Verzögerer zugegeben werden |
| **5** | | 100-1200 | Wert der Nassdichte in kg/m³ - 50 kg/m³ | 2,33 | 0.1-1,1 für eine Temperatur von 0 bis 50°C wobei für eine Temperaturdifferenz von 5 K jeweils 0.1 Gewichts-% mehr Verzögerer zugegeben werden | 1.5 für eine Nassdichte von 100-399 kg/m³; |
| | | | | | | 1.0 für eine Nassdichte von 400-749 kg/m³; |
| | | | | | | 0.75 für eine Nassdichte von 750-1200 kg/m³ |
| **6** | | 100-1200 | Wert der Nassdichte in kg/m³ - 50 kg/m³ | 2,33 | 0.5-1.5 für eine Temperatur von 0 bis 50°C wobei für eine Temperaturdifferenz von 5 K jeweils 0.1 Gewichts-% mehr Verzögerer zugegeben werden | - |

**Beispiele 7-30: Herstellung von Porenleichtbeton: Tabelle 3**

| **Beispiel/ Komponenten und Parameter** | **Nassdichte [kg/m³]** | **Gesamtmenge an Zement in kg [% der Menge an Wasser in kg pro 1 m³ Schaum]** | **Gewichtsverhältnis Wasser zu Zement** | **Menge an Verflüssiger [Gewichtsverhältnis zur Gesamtmenge an Zement in %]** |
|---|---|---|---|---|
| **7** | 100 | 84 | 0,2 | 0,5 |
| **8** | 150 | 82,5 | 0,2 | 0,5 |
| **9** | 200 | 83,3 | 0,2 | 0,5 |
| **10** | 250 | 83,1 | 0,2 | 0,5 |
| **11** | 300 | 83,4 | 0,2 | 0,5 |
| **12** | 350 | 83,4 | 0,2 | 0,5 |
| **13** | 400 | 83,4 | 0,2 | 0,5 |
| **14** | 450 | 83,0 | 0,2 | 0,5 |
| **15** | 500 | 81,7 | 0,22 | 0,5 |
| **16** | 550 | 80,9 | 0,23 | 0,5 |
| **17** | 600 | 80,2 | 0,235 | 0,5 |
| **18** | 650 | 79,6 | 0,245 | 0,5 |
| **19** | 700 | 79,6 | 0,252 | 0,5 |
| **20** | 750 | 79,1 | 0,259 | 0,5 |
| **21** | 800 | 78,6 | 0,265 | 0,3 |
| **22** | 850 | 78,1 | 0,27 | 0,3 |
| **23** | 900 | 77,7 | 0,275 | 0,3 |
| **24** | 950 | 77,4 | 0,275 | 0,3 |
| **25** | 1000 | 77,2 | 0,282 | 0,3 |
| **26** | 1050 | 77,1 | 0,285 | 0,3 |
| **27** | 1100 | 76,8 | 0,287 | 0,3 |
| **28** | 1150 | 76,8 | 0,291 | 0,3 |
| **29** | 1200 | 76,6 | 0,293 | 0,3 |
| **30** | 1250 | 76,6 | 0,295 | 0,3 |

**Beispiele 31-54, 31 A-54A und 31 B-54B: Herstellung von Porenleichtbeton: Tabelle 4**

| **Beispiel/ Komponenten und Parameter** | **Nassdichte [kg/m³]** | **Gesamtmenge an Zement in kg [% der Menge an Wasser in kg pro 1 m³ Schaum]** | **Menge an Verflüssiger [Gewichtsverhältnis zur Gesamtmenge an Zement in %]** |
|---|---|---|---|
| **31** | 100 | 82 | 1.5 |
| **32** | 150 | 82,5 | 1.5 |
| **33** | 200 | 82 | 1.5 |
| **34** | 250 | 81,9 | 1.5 |
| **35** | 300 | 82,2 | 1.5 |
| **36** | 350 | 81,9 | 1.5 |
| **37** | 400 | 82,3 | 1.0 |
| **38** | 450 | 82,4 | 1.0 |
| **39** | 500 | 81,1 | 1.0 |
| **40** | 550 | 80,4 | 1.0 |
| **41** | 600 | 79,7 | 1.0 |
| **42** | 650 | 79,3 | 1.0 |
| **43** | 700 | 79,6 | 1.0 |
| **44** | 750 | 78,5 | 1.0 |
| **45** | 800 | 78,2 | 0.75 |
| **46** | 850 | 77,9 | 0.75 |
| **47** | 900 | 77,7 | 0.75 |
| **48** | 950 | 77,7 | 0.75 |
| **49** | 1000 | 77,5 | 0.75 |
| **50** | 1050 | 77,0 | 0.75 |
| **51** | 1100 | 76,8 | 0.75 |
| **52** | 1150 | 76,7 | 0.75 |
| **53** | 1200 | 76,5 | 0.75 |
| **54** | 1250 | 76,4 | 0.75 |

**Beispiele 55-78: Herstellung von Porenleichtbeton: Tabelle 5**

| **Komponenten und Parameter / Beispiel** | **Nassdichte [kg/m³]** | **Gesamtmenge an Zement in kg [% der Nassdichte in kg/m³]** |
|---|---|---|
| **55** | 100 | 42,0 |
| **56** | 150 | 55,0 |
| **57** | 200 | 62,0 |
| **58** | 250 | 66,1 |
| **59** | 300 | 69,0 |
| **60** | 350 | 71,0 |
| **61** | 400 | 72,2 |
| **62** | 450 | 73,5 |
| **63** | 500 | 73,3 |
| **64** | 550 | 73,3 |
| **65** | 600 | 73,7 |
| **66** | 650 | 73,6 |
| **67** | 700 | 73,6 |
| **68** | 750 | 73,6 |
| **69** | 800 | 73,6 |
| **70** | 850 | 73,6 |
| **71** | 900 | 73,6 |
| **72** | 950 | 73,8 |
| **73** | 1000 | 73,6 |
| **74** | 1050 | 73,6 |
| **75** | 1100 | 73,6 |
| **76** | 1150 | 73,6 |
| **77** | 1200 | 73,5 |
| **78** | 1250 | 73,6 |

**Beispiele 93-95: Herstellung von Porenleichtbeton: Tabelle 6**

| **Beispiel/ Komponenten und Parameter** | **Eigenschaften** | **Nassdichte [kg/m³]** | **Gewichtsverhältnis Verzögerer zur Gesamtmenge an Zement [%]** | **Menge an Verflüssiger [Gewichtsverhältnis zur Gesamtmenge an Zement in %]** |
|---|---|---|---|---|
| **93** | Bis -5°C verarbeitbar; feuerfest | 100-1250 | 0,1-1,1 für eine Temperatur von 0 bis 50°C wobei für eine Temperaturdifferenz von 5 K jeweils 0.1 Gewichts-% mehr Verzögerer zugegeben werden | 0.5 |
| **94** | Standfest bei einem Gefälle bis zu 3% | 100-1250 | 0.5-1.5 für eine Temperatur von 0 bis 50°C wobei für eine Temperaturdifferenz von 5 K jeweils 0.1 Gewichts-% mehr Verzögerer zugegeben werden | - |
| **95** | Hoch fliessfähig | 100-1250 | 0,1-1,1 für eine Temperatur von 0 bis 50°C wobei für eine Temperaturdifferenz von 5 K jeweils 0.1 Gewichts-% mehr Verzögerer zugegeben werden | 1.5 für eine Nassdichte von 100-399 kg/m³; 1.0 für eine Nassdichte von 400-849 kg/m³; 0.75 für für eine Nassdichte von 850-1250 kg/m³ |

**Beispiele 96-98: Herstellung von Porenleichtbeton: Tabelle 7**

| **Beispiel/ Komponenten und Parameter** | **Eigenschaften** | **Nassdichte [kg/m³]** | **Gesamtmenge an Zement in kg** | **Gewichtsverhältnis Zement 52,5 R zu CSA Zement zu Tonerdeschmelzzement** | **Gewichtsverhältnis Verzögerer zu Zement [%]** | **Menge an Verflüssiger [Gewichtsverhältnis zur Gesamtmenge an Zement in %]** |
|---|---|---|---|---|---|---|
| **96** | Höhere Stabilität der Zementmischung | 100-1200 | 76,7-84,0% der Menge an Wasser für den Schaum in kg | 6,66 : 1 : 1 | 0,1-1,1 für eine Temperatur von 0 bis 50°C wobei für eine Temperaturdifferenz von 5 K jeweils 0,1 Gewichts-% mehr Verzögerer zugegeben werden | 0.5 |
| **97** | fliessfähig | 100-1250 | 76,7-84,0% der Menge an Wasser für den Schaum in kg | 6,66 : 1 : 1 | 0,1-1,1 für eine Temperatur von 0 bis 50°C wobei für eine Temperaturdifferenz von 5 K jeweils 0,1 Gewichts-% mehr Verzögerer zugegeben werden | 1.5 für eine Nassdichte von 100-399 kg/m³; 1.0 für eine Nassdichte von 400-749 kg/m³; 0.75 für für eine Nassdichte von 750-1250 kg/m³ |
| **98** | Trotz eines Gefälles von 3-5% | 100-1250 | | 6,66 : 1 : 1 | 0.5-1.5 für eine Temperatur von 0 bis 50°C wobei für eine Temperaturdifferenz | - |
| | verarbeitbar | | | | von 5 K jeweils 0.1 Gewichts-% mehr Verzögerer zugegeben werden | |

**Beispiele 99-101: Herstellung von Porenleichtbeton bei Aussentemperaturen bis zu -3°C: Tabelle 8**

| **Beispiel/ Komponenten und Parameter** | **Eigenschaften** | **Nassdichte [kg/m³]** | **Gewichtsverhältnis Wasser zur Gesamtmenge an Zement** | **Gewichtsverhältnis Zement 52,5 R zu CSA Zement zu Tonerdeschmelzzement** | **Gewichtsverhältnis Verzögerer zur Gesamtmenge an Zement [%]** | **Menge an Verflüssiger [Gewichtsverhältnis zur Gesamtmenge an Zement in %]** |
|---|---|---|---|---|---|---|
| **99** | Bis -5°C verarbeitbar; feuerfest | 100-1250 | 0,28 | 7,7 : 2 : 1 | 0,5 bei einer Nassdichte von 100 - 349 kg/m³, 0,4 bei einer Nassdichte von 350-849 kg/m³, 0,3 bei einer Nassdichte von 850-1250 kg/m³ | 0,5 bei einer Nassdichte von 100 - 349 kg/m³, 0,4 bei einer Nassdichte von 350-849 kg/m³, 0,3 bei einer Nassdichte von 850-1250 kg/m³ |
| **100** | Standfest bei einem Gefälle bis zu 3% | 100-1250 | 0,28 | 7,7 : 2 : 1 | 1.5 für eine Nassdichte von 100-399 kg/m³; 1.0 für eine Nassdichte von 400-899 kg/m³; 0.75 | - |
| | | | | | für für eine Nassdichte von 900-1250 kg/m³ | |
| **101** | Hoch fliessfähig | 100-1250 | 0,28 | 7,7 : 2 : 1 | 0,1-1,1 für eine Temperatur von 0 bis 50°C wobei für eine Temperaturdifferenz von 5 K jeweils 0,1 Gewichts-% mehr Verzögerer zugegeben werden | 1.5 für eine Nassdichte von 100-449 kg/m³; 1.0 für eine Nassdichte von 450-849 kg/m³; 0.75 für für eine Nassdichte von 850-1250 kg/m³ |

**Beispiele 112-116: Herstellung von Fliessestrich: Tabelle 11**

| **Beispiel/ Komponenten und Parameter** | **Eigenschaften** | **Menge an Glasfaser [kg] pro 100 kg Sand-Zement-Mischung** | **Menge an Eisenoxid-Pulver [% der Menge an 42,5 R Zement in kg]** |
|---|---|---|---|
| **112** | - | - | - |
| **113** | - | 0,35 | - |
| **114** | - | 0,7 | - |
| **115** | schleifbar | - | 1 |
| **116** | schleifbar | - | 1 |

**Beispiele 102-104: Herstellung von Porenleichtbeton bei Aussentemperaturen bis zu -3°C: Tabelle 9**

| **Beispiel/ Komponenten und Parameter** | **Nassdichte [kg/m³]** | **Gesamtmenge an Zement in kg [% der Nassdichte in kg/m³]** | **Gewichtsverhältnis Zement 52,5 R zu CSA Zement** | **Gewichtsverhältnis Verzögerer zu Zement [%]** | **Menge an Verflüssiger [Gewichtsverhältnis zur Gesamtmenge an Zement in %]** |
|---|---|---|---|---|---|
| **102** | 100-1200 | 42 | 7,7 : 3,8 : 1 | 0,1-1,1 für eine Temperatur von 0 bis 50°C wobei für eine Temperaturdifferenz von 5 K jeweils 0,1 Gewichts-% mehr Verzögerer zugegeben werden | 0.5 bei einer Temperatur von 0°C bis 50°C |
| **103** | 100-1250 | 42 | 7,7 : 3,8 : 1 | 0,1-1,1 für eine Temperatur von 0 bis 50°C wobei für eine Temperaturdifferenz von 5 K jeweils 0,1 Gewichts-% mehr Verzögerer zugegeben werden | Temperaturunabhängig: 1.5 für eine Nassdichte von 100-399 kg/m³; 1.0 für eine Nassdichte von 400-749 kg/m³; 0.75 für eine Nassdichte von 750-1250 kg/m³ |
| **104** | 100-1250 | | 7,7 : 3,8 : 1 | 0.5-1.5 für eine Temperatur von 0 bis 50°C wobei für eine Temperaturdifferenz von 5 K jeweils 0.1 Gewichts-% mehr Verzögerer zugegeben werden | - |

**Beispiele 105-111: Herstellung von 3D-Druckmörtel: Tabelle 10**

| **Beispiel und Eigenschaften/ Komponenten und Parameter** | **Nassdichte [kg/m³]** | **Menge an Sand mit der Korngrösse 0-1 mm [kg bezogen auf 100 kg 3D Druckmörtelmasse]** | **Gewichtsverhältnis Sand zu Zement [kg/kg]** | **Gewichtsverhältnis Zement 52,5 R zu CSA Zement** | **Gewichtsverhältnis Verzögerer zu Zement [%]** | **Menge an Glasfaser [kg] pro 100 kg 3D Druckmörtelmasse** | **Menge an Eisenoxid-Pulver [% der Menge an 42,5 R Zement in kg]** |
|---|---|---|---|---|---|---|---|
| **105** | 1900-2100 | 72 | 2,57 : 1 | 2,33 : 1 | Bei Temperaturen bis zu 24°C 0; bei 25°C 0,01; bei 30°C 0,02; bei 35°C 0,8; bei 40°C 0,9; bei 45°C 1; bei 50°C 1,1. | - | - |
| **106** | 2000-2200 | 70 | 2,3 : 1 | 2,33 : 1 | 0,1-1, 1 für eine Temperatur von 0 bis 50°C wobei für eine Temperaturdifferenz von 5 K jeweils 0,1 | 0,35 | - |

| | | | | | | | |
|---|---|---|---|---|---|---|---|
| | | | | | Gewichts-% mehr Verzögerer zugegeben werden | | |
| **107** | 1800-2200 | 70 | 2,3: 1 | 2,33: 1 | 0,1-1,1 für eine Temperatur von 0 bis 50°C wobei für eine Temperaturdifferenz von 5 K jeweils 0,1 Gewichts-% mehr Verzögerer zugegeben werden | 0,7 | - |
| **108** | 2000-2200 | 70 | 2,3 : 1 | 2,33 : 1 (statt 52,5 R Zement wird 42,5 R Zement eingesetzt) | 0,1-1,1 für eine Temperatur von 0 bis 50°C wobei für eine Temperaturdifferenz von 5 K jeweils 0,1 Gewichts-% mehr Verzögerer zugegeben werden | - | 1 |
| **109** | 2000-2200 | 70 | 2,3 : 1 | 2,33 : 1 (statt 52,5 | 0,1-1,1 für eine Temperatur | - | 1 |

| | | | | | | | |
|---|---|---|---|---|---|---|---|
| | | | | R Zement wird 42,5 R Zement eingesetzt) | von 0 bis 50°C wobei für eine Temperaturdifferenz von 5 K jeweils 0,1 Gewichts-% mehr Verzögerer zugegeben werden | | |
| **110** | 1900-2100 | 72 | 2,57 : 1 | 2,33, wobei die Hälfte des CSA-Zements durch Tonerdezement ersetzt wird | 0,1-1,2 für eine Temperatur von -5°C bis 50°C wobei für eine Temperaturdifferenz von 5 K jeweils 0,1 Gewichts-% mehr Verzögerer zugegeben werden | - | - |
| **Bei -5°C verarbeitbar.** | | | | | | | |
| **111** | 1900-2100 | 72 | 2,57 : 1 | 2,33, wobei der CSA-Zement durch Tonerdezement ersetzt wird | 0 bei - 1 0°C, 0,05 bei -5°C; 0,1-1,1 für eine Temperatur von 0 bis 50°C wobei für eine | - | - |
| **Bei -10°C verarbeitbar.** | | | | | | | |

| | | | | | | | |
|---|---|---|---|---|---|---|---|
| | | | | | Temperaturdifferenz von 5 K jeweils 0,1 Gewichts-% mehr Verzögerer zugegeben werden | | |

**Beispiele 117-122: Herstellung von Spachtelmasse: Tabelle 12**

| **Beispiel/ Komponenten und Parameter** | **Dicke, zu der die Spachtelmasse verarbeitet werden kann [mm]** | **Menge an Glasfaser [kg] pro 100 kg Sand und Zement** | **Menge an Eisenoxid-Pulver oder Farbmittel [% der Menge an 42,5 R Zement in kg]** |
|---|---|---|---|
| **117** | 1-50 | - | - |
| **118** | 2-60 | 0,5 | - |
| **119** | 2-70 | 1 | - |
| **120** | 5-50 | - | 5 |
| **121** | 5-50 | - | 1 |
| **122** | 5-50 | - | 1 |

## Patentansprüche

1. Eine Zusammensetzung zur Herstellung von Beton, insbesondere von Porenleichtbeton, von Fliessestrich, von 3D Druckmörtel oder von Spachtelmasse enthaltend die folgenden Komponenten:
i) eine pulverförmige Hauptkomponente ausgewählt aus CEM I Zement, CEM II Zement, Sand, Quarzsand und deren Mischungen, bevorzugt ausgewählt aus 52,5 R Zement, 42,5 R Zement, 32,5 R Zement, Sand, Quarzsand und deren Mischungen;
ii) eine weitere erste pulverförmige Nebenkomponente ausgewählt aus CSA-Zement, Calciumaluminat-Zement und deren Mischungen;
iii) optional eine weitere zweite Nebenkomponente ausgewählt aus Glasfasern, Eisenoxidpulvern und Farbmitteln;
iv) mindestens eine flüssige Nebenkomponente ausgewählt aus Verzögerern und Verflüssigern;
v) optional mindestens ein flüssiges Schaummittel; und
vi) Wasser;
wobei die Menge an Verflüssiger und/oder die Menge an Verzögererjeweils im Bereich von 0,05 bis 2,00 Gew.-% ist, bezogen auf das Gesamtgewicht an Zement in der Zusammensetzung, und
wobei die Zusammensetzung eine Nassdichte im Bereich von 100 bis 1250 kg/m³ für Porenleichtbeton, eine Nassdichte im Bereich von 1800 bis 2200 kg/m³ für 3D Druckmörtel, eine Nassdichte im Bereich von 2000 bis 2200 kg/m³ für Fliessestrich und eine Nassdichte im Bereich von 1900 bis 2000 kg/m³ für Spachtelmasse aufweist.

2. Die Zusammensetzung nach Anspruch 1, wobei die pulverförmige Hauptkomponente i) 52,5 R Zement oder 42,5 R Zement oder deren Mischung ist, bevorzugt wobei die pulverförmige Hauptkomponente i) 52,5 R Zement ist, und wobei die erste pulverförmige Nebenkomponenten ii) CSA-Zement oder Calciumaluminat-Zement oder deren Mischung ist, bevorzugt wobei die erste pulverförmige Nebenkomponenten ii) CSA-Zement ist, insbesondere wenn die Zusammensetzung eine Zusammensetzung zur Herstellung von Beton, insbesondere zur Herstellung von Porenleichtbeton, ist.

3. Die Zusammensetzung nach Anspruch 1 und/oder Anspruch 2, wobei das Gewichtsverhältnis der Komponente i) zu der Komponente ii) im Bereich von 10 : 1 bis 1 : 1, bevorzugt im Bereich von 5 : 1 bis 1,2 : 1, besonders bevorzugt im Bereich von 4 : 1 bis 1,3 : 1 ist, bevorzugt wenn die Komponente i) CEM I Zement und die Komponente ii) CSA-Zement ist, besonders bevorzugt wenn die Komponente i) 52,5 R Zement und die Komponente ii) CSA-Zement ist.

4. Die Zusammensetzung nach Anspruch 2 und/oder Anspruch 3, wobei der CSA-Zement mindestens teilweise durch Calciumaluminat-Zement ersetzt ist, wobei bevorzugt der CSA-Zement in einem Bereich von 30 bis 70 Gew.-%, besonders bevorzugt in einem Bereich von 40 bis 60 Gew.-%, ganz besonders bevorzugt in einem Bereich von 45 bis 55 Gew.-%, durch Calciumaluminat-Zement ersetzt ist.

5. Die Zusammensetzung nach einem oder mehreren der vorhergehenden Ansprüche, wobei das flüssige Schaummittel v) in einer Menge im Bereich von 10 bis 50 g pro 1 Liter Wasser ist, bevorzugt in einer Menge im Bereich von 20 bis 40 g pro 1 Liter Wasser, besonders bevorzugt in einer Menge im Bereich von 25 bis 35 g pro 1 Liter Wasser, ganz besonders bevorzugt in einer Menge im Bereich von 28 bis 32 g pro 1 Liter Wasser.

6. Die Zusammensetzung nach einem oder mehreren der vorhergehenden Ansprüche, wobei die die Menge an Verzögerer im Bereich von 0,1 bis 1,5 Gew.-% ist, bezogen auf das Gesamtgewicht an Zement.

7. Die Zusammensetzung nach einem oder mehreren der vorhergehenden Ansprüche, wobei das Gewichtsverhältnis von Wasser zu Zement im Bereich von 0,2 : 1 zu 0,6 : 1 ist.

8. Die Zusammensetzung nach einem oder mehreren der vorhergehenden Ansprüche, wobei das Gewichtsverhältnis von Wasser zu Zement in der Zusammensetzung für Beton, insbesondere für Porenleichtbeton, im Bereich von 0,2 : 1 bis 0,4 : 1 ist, und/oder wobei das Gewichtsverhältnis von Wasser zu Zement in der Zusammensetzung für Fliessestrich, 3D Druckmörtel oder Spachtelmasse im Bereich von 0,3 : 1 bis 0,55 : 1 ist.

9. Ein Verfahren zur Herstellung der Zusammensetzung nach einem oder mehreren der vorhergehenden Ansprüche, welches die folgenden Schritte umfasst:
a) Einbringen der mindestens einen flüssigen Nebenkomponente iv) in Wasser, vorzugsweise über eine Dosierpumpe, und Mischen dieser Nebenkomponente und Wasser zu einer wässrigen Mischung;
b) optional Einbringen des mindestens einen flüssigen Schaummittels v) in Wasser und Mischen mit Luft, um Schaum herzustellen;
c) Einbringen der weiteren Komponenten i), ii) und iii) in einen ersten Mischer, vorzugsweise über einzelne, separate Dosierpumpen, und Mischen mit der in Schritt a) hergestellten wässrigen Mischung zu einem Slurry;
d) weiteres Mischen des in Schritt c) hergestellten Slurrys in einem zweiten Mischer, optional unter Zugabe des in Schritt c) hergestellten Schaumes, zu der Zusammensetzung;
e) Entnehmen der Zusammensetzung aus dem zweiten Mischer.

10. Das Verfahren nach Anspruch 9, wobei die Schritte a) bis e) kontinuierlich erfolgen.

11. Das Verfahren nach Anspruch 9 und/oder Anspruch 10, wobei die Zusammensetzung Beton, insbesondere Porenleichtbeton, ist, und wobei Schritt b) durchgeführt wird, und wobei das weitere Mischen in Schritt d) unter Zugabe des in Schritt c) hergestellten Schaumes erfolgt.

12. Beton, insbesondere Porenleichtbeton, hergestellt durch Trocknen einer Zusammensetzung nach einem oder mehreren der Ansprüche 1 bis 8.

13. Verwendung einer getrockneten Zusammensetzung nach einem oder mehreren der Ansprüche 1 bis 8 als Beton, insbesondere als Porenleichtbeton.

14. Fliessestrich, 3D Druckmörtel und Spachtelmasse hergestellt durch Trocknen einer Zusammensetzung nach einem oder mehreren der Ansprüche 1 bis 8.

15. Verwendung einer getrockneten Zusammensetzung nach einem oder mehreren der Ansprüche 1 bis 8 als Fliessestrich, 3D Druckmörtel oder Spachtelmasse.
